# FASCICULE DE BREVET EUROPEEN

(11) **EP 0 443 987 B1**
(45) Date de publication et mention de la délivrance du brevet: **18.10.1995**
(21) Numéro de dépôt: 91810115.5
(22) Date de dépôt: 21.02.1991
(51) Int. Cl.: H04N 7/167

(54) **Procédé et dispositif d'embrouillage et de désembrouillage d'un signal vidéo**
Verfahren und Vorrichtung zur Verwürfelung und Entwürfelung eines Videosignals
Method and device for scrambling and descrambling of a video signal

(30) Priorité: 21.02.1990 CH 564/90
(43) Date de publication de la demande: 28.08.1991
(73) Titulaire: NAGRA PLUS S.A., CH-1033 Cheseaux-sur-Lausanne (CH)
(72) Inventeur: Kudelski, André, CH-1023 Crissier (CH)
(74) Mandataire: Cronin, Brian Harold John

(56) Documents cités:
- EP-A- 0 115 097
- EP-A- 0 127 383
- EP-A- 0 158 383
- EP-A- 0 309 984
- US-A- 4 405 942
- US-A- 4 673 975
- INTERNATIONAL JOURNAL OF ELECTRONICS, vol. 59, no. 4, octobre 1985, pages 501-509, Londres, GB; V. ZACHAROPOULOS et al.: "An analogue scrambling scheme for television signals"

## Description

La présente invention concerne un procédé d'embrouillage et de désembrouillage d'un signal vidéo et trouve son application principalement dans les systèmes de télévision à péage pour lesquels il est essentiel d'embrouiller l'émission vidéo et de désembrouiller ou décoder l'émission chez le souscripteur qui est muni d'un décodeur approprié et qui dispose du droit de regarder l'émission diffusée.

On connaît un certain nombre de procédés d'embrouillage et de désembrouillage correspondant visant à rendre incompréhensible l'image et/ou le son émis ou rendant leur vision et/ou leur audition inconfortable.

Un procédé connu comprend, au niveau de l'émission, des étapes consistant à embrouiller, selon une fonction d'embrouillage déterminée, des séquences du signal vidéo comportant chacune un groupe de lignes, cette fonction d'embrouillage pouvant être différente pour chaque séquence, et à diffuser chaque séquence du signal vidéo ainsi embrouillée; alors qu'au niveau de la réception, les séquences du signal vidéo embrouillé reçues sont stockées et ensuite désembrouillées.

On connaît par exemple un procédé d'embrouillage consistant à permuter un certain nombre constant de lignes de l'image vidéo, selon une fonction de permutation déterminée. Dans ce cas, le désembrouillage consiste à effectuer la fonction inverse de celle qui est utilisée à l'émission pour permuter ce certain nombre de lignes d'image. Comme il n'est pas techniquement facile de permuter ainsi un grand nombre de lignes d'image, on se limite actuellement à environ 32 lignes permutées. Un tel procédé est connu du document US-A-4 405 942.

Ce procédé dit "de permutation à blocs fixes" présente l'inconvénient de nécessiter une mémoire de grande taille à la réception parce que, au moment de la fin de l'envoi sur le téléviseur, pour pouvoir envoyer immédiatement la suite de l'image, il faut disposer d'une séquence des 32 lignes mémorisées suivantes. Ce procédé est relativement simple à mettre en oeuvre au niveau de l'émission, mais des problèmes de fiabilité, de sécurité et de coût se posent au niveau de la réception, vu le grand nombre de décodeurs. Par ailleurs, ce procédé manque de sécurité contre certaines formes de piratage. Il est en effet possible de retrouver l'ordre des permutations, même si cet ordre change fréquemment au cours de l'émission.

Un autre procédé d'embrouillage connu, qui peut d'ailleurs être combiné au procédé de permutation à blocs fixes, consiste à effectuer, sur chaque ligne d'image diffusée, une rotation selon une valeur prédéterminée variable. A la réception, on retrouve la ligne d'image en clair en effectuant simplement une rotation complémentaire de la ligne d'image reçue.

On voit que dans les deux exemples ci-dessus, la fonction de désembrouillage est quasiment la même que la fonction d'embrouillage, puisque les deux fonctions sont de même nature et sont réciproques. Ceci est également le cas dans le procédé du document US-A-4 405 942. Ces fonctions sont par ailleurs simples à pirater parce qu'elles sont indépendantes de tout autre paramètre ou de toute autre information.

La présente invention vise à éviter les inconvénients qui viennent d'être cités, c'est-à-dire d'augmenter la fiabilité et la sécurité du procédé au niveau de la réception, tout en permettant de réduire la taille de la mémoire de chaque décodeur, donc le coût.

Dans ce but, le procédé selon l'invention consiste à ce que, à l'émission, une première séquence vidéo est embrouillée selon une première fonction d'embrouillage, et une autre séquence du signal vidéo est embrouillée selon une autre fonction d'embrouillage. A la réception, l'autre séquence du signal vidéo embrouillée selon l'autre fonction d'embrouillage vient se stocker en remplaçant la première séquence du signal vidéo embrouillée selon la première fonction d'embrouillage par remplacement des lignes de la première séquence par des lignes de l'autre séquence. Lors de ce remplacement, l'autre séquence du signal vidéo vient se stocker de façon embrouillée selon une fonction qui est égale à une combinaison déterminée de la première fonction d'embrouillage et de l'autre fonction d'embrouillage.

On voit donc que la fonction d'embrouillage des lignes stockées à la réception est une fonction relative et non absolue dans le sens où cette fonction est une combinaison des fonctions d'embrouillage des lignes successives.

Chaque fonction d'embrouillage peut consister à diffuser successivement un groupe de lignes de l'image vidéo selon un ordre différent de l'ordre normal correspondant à l'image en clair. Dans ce cas, on peut disposer, à la réception, d'une mémoire comprenant un nombre déterminé de lignes de mémoire, chaque ligne de mémoire pouvant stocker une ligne d'image reçue, le stockage d'une ligne d'image reçue provoquant l'envoi sur un téléviseur de la ligne précédemment stockée dans cette ligne de mémoire.

Selon une manière d'effectuer l'embrouillage, objet de la demande de brevet européenne 91903324/EP-A-0 469 106 publiée le 05.02.92 et présentant la même priorité que la présente demande, pour chaque ligne d'image diffusée, on indique l'adresse de la ligne de ladite mémoire à la réception dans laquelle cette ligne d'image diffusée doit être stockée et, en plus, on détermine l'instant d'émission de cette ligne d'image de façon à ce qu'elle vienne remplacer, dans la mémoire à la réception, une ligne d'image précédente au moment où cette ligne d'image précédente doit être envoyée sur le téléviseur dans l'ordre normal des lignes d'image pour générer l'image en clair.

En outre, chaque fonction d'embrouillage peut comporter, pour chaque ligne d'image, sa diffusion en commençant à un endroit déterminé variable de la ligne d'image et en allant jusqu'à sa fin, en continuant la diffusion depuis le début de la ligne d'image jusqu'audit endroit déterminé, provoquant ainsi une rotation de la ligne d'image sur elle-même d'une valeur déterminée variable correspondant audit endroit déterminé.

Selon une autre forme de réalisation de l'invention, à la réception, il est prévu une mémoire comprenant un nombre déterminé de lignes de mémoire, chaque ligne de mémoire pouvant stocker une ligne d'image reçue ayant subi, lors de l'émission, une certaine rotation. Le stockage d'une ligne d'image ainsi reçue s'effectue de façon à provoquer le déstockage et l'envoi sur un téléviseur de la ligne d'image précédemment stockée dans cette ligne de mémoire ayant subi une autre rotation, ce déstockage s'effectuant selon l'ordre normal de la ligne d'image exempte de rotation, afin que cette ligne d'image soit envoyée directement sur le téléviseur pour constituer l'image en clair.

Dans ce but, chaque ligne de mémoire, qui est constituée de façon à pouvoir effectuer une permutation circulaire, peut comporter un certain nombre de cases mémoire correspondant à chaque point d'image d'une ligne d'image. Le stockage d'une ligne d'image suivante ayant subi une certaine rotation s'effectue dans la case mémoire correspondant au début de la ligne d'image précédemment stockée dans la ligne de mémoire et qui avait subi une autre rotation. Le déstockage de cette ligne d'image précédemment stockée s'effectue donc simultanément au stockage, depuis la case dans laquelle est stockée la fin de la ligne d'image précédemment stockée. De cette manière, au fur et à mesure que s'effectue le stockage de la ligne d'image suivante avec rotation, il s'effectue en même temps le déstockage de la ligne d'image précédente selon un ordre normal, c'est-à-dire exempte de rotation, pour son envoi direct sur le téléviseur.

Le stockage dans la ligne de mémoire de la ligne d'image suivante ayant subi une rotation d'une certaine valeur peut s'effectuer en commençant par la dernière information de cette ligne d'image avec rotation. Il en résulte que la valeur de la rotation de la ligne d'image suivante telle qu'elle se stocke dans la ligne de mémoire est égale à la valeur de la rotation de la ligne d'image suivante telle qu'elle a été diffusée, additionnée à la valeur de la rotation de la ligne d'image précédemment stockée dans la même ligne de mémoire telle qu'elle avait été stockée dans cette ligne de mémoire.

Selon une variante de réalisation de l'invention, lors du stockage d'une ligne d'image suivante, les informations de cette ligne d'image suivante situées au voisinage de sa coupure effectuée dans la ligne lors l'émission, sont stockées avec une certaine pondération afin d'effectuer pendant le stockage un lissage de la ligne d'image.

Selon une autre variante, le stockage dans la ligne de mémoire d'une ligne d'image suivante ayant subi une rotation d'une certaine valeur s'effectue en commençant par une information située selon un décalage constant prédéterminé par rapport à la dernière information de cette ligne d'image. Lorsque le stockage de cette ligne d'image est achevé, la permutation circulaire de la ligne d'image stockée est poursuivie selon un autre décalage prédéterminé, en effectuant, lors de chaque permutation au cours de ce décalage une correction, des informations contenues dans la case par où a été fait le stockage, et ce afin d'effectuer un lissage de la ligne d'image au voisinage de sa coupure effectuée lors de l'émission.

L'invention concerne aussi un système d'embrouillage et de désembrouillage d'un signal vidéo pour la mise en oeuvre du procédé revendiqué. Ce système comprend une station d'émission agencée pour embrouiller des séquences du signal vidéo comme décrit ci-dessus, et pour diffuser chaque groupe de lignes de l'image vidéo selon un ordre différent de l'ordre normal correspondant à l'image en clair, et des stations de réception, c'est-à-dire des décodeurs des souscripteurs, comportant chacune des moyens pour effectuer le stockage des séquences du signal vidéo embrouillé reçues, et ensuite le désembrouillage de ces séquences du signal vidéo.

La station d'émission du système est agencée de manière à embrouiller une première séquence du signal vidéo selon une première fonction d'embrouillage et à embrouiller une autre séquence du signal vidéo selon une autre fonction d'embrouillage, par exemple par permutation à blocs fixes et/ou par permutation circulaire.

Chaque station de réception ou décodeur comprend une mémoire comportant un nombre déterminé de lignes de mémoire, chaque ligne de mémoire pouvant stocker une ligne d'image reçue de manière à ce que chaque séquence du signal vidéo embrouillée vient se stocker par remplacement d'une ligne d'une première séquence par une ligne d'une autre séquence, ceci selon une fonction d'embrouillage qui est égale à une combinaison des fonctions d'embrouillage de ces deux lignes.

Le système est en outre agencé de manière à ce que le stockage d'une ligne d'image reçue dans une ligne de mémoire d'une station de réception provoque l'envoi sur un téléviseur de la ligne précédemment stockée dans cette ligne de mémoire dans l'ordre normal des lignes d'image pour générer l'image en clair, ceci par re-permutation des lignes et/ou par une rotation complémentaire lors de ce déstockage.

Un autre aspect de l'invention concerne un dispositif pour le stockage et le désembrouillage d'un signal vidéo embrouillé selon le procédé décrit ci-dessus utilisant, à la réception, un décodeur, pourvu d'une mémoire, agencé également comme décrit ci-dessus.

La présente invention sera mieux comprise en se référant à la description d'un exemple de réalisation qui va suivre et aux dessins annexés dans lesquels :
- la figure 1 représente schématiquement un signal vidéo en clair;
- la figure 2 représente schématiquement le signal vidéo embrouillé;
- la figure 3 représente les contenus des lignes embrouillées;
- la figure 4 représente le mode de stockage dans un buffer du décodeur;
- les figures 5 à 7 représentent un mode de réalisation de l'invention; et
- la figure 8 représente une variante de réalisation de l'invention.

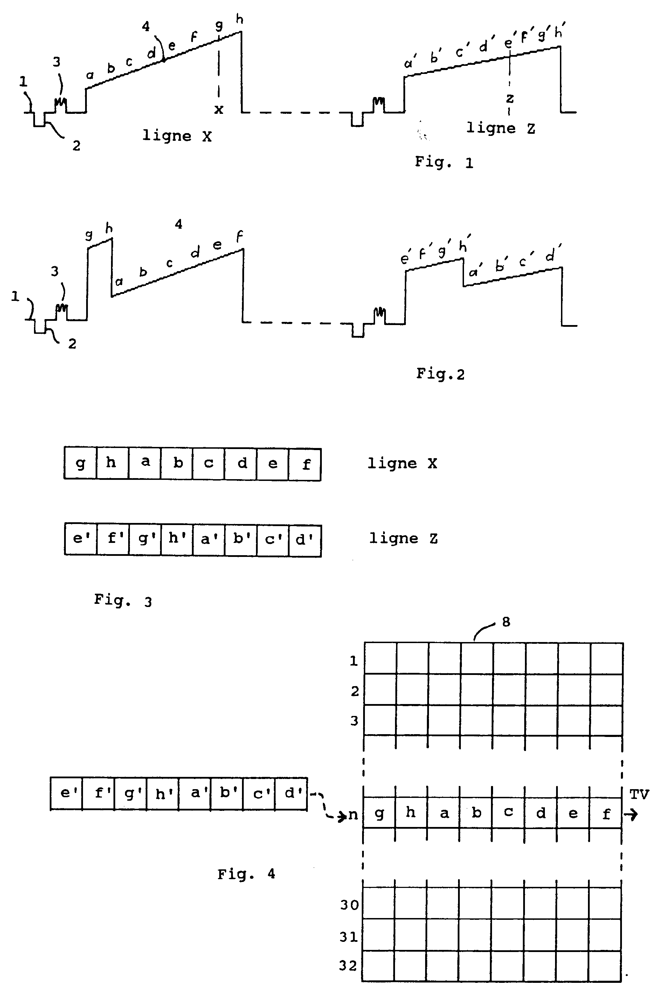

Dans la figure 1, on distingue un signal vidéo classique 1, dans lequel on retrouve un top de synchronisation 2, une salve d'identification de sous-porteuse (appelée communément burst) 3 et un signal d'image 4 incluant des informations numérisées de luminance et/ou de chrominance.

Selon le mode de réalisation de l'invention décrit ci-après, et donné à titre d'exemple non limitatif, chaque ligne d'image 4 est embrouillée à l'émission en lui faisant subir une rotation d'une certaine valeur déterminée variable, de façon aléatoire ou pseudo-aléatoire, comme cela est représenté en figure 1.

Une ligne d'image numérisée comprend classiquement un grand nombre, par exemple 256 ou 512, d'échantillons numérisés, mais pour simplifier on a représenté dans les figures seulement huit échantillons a,b,c,d,e,f,g,h.

La ligne X est coupée au niveau x et une autre ligne Z, consécutive ou non mais qui devra être stockée à la réception en remplacement de la ligne X, est coupée au niveau z. On a représenté en figure 2 les lignes X et Z embrouillées telles qu'elles apparaissent sur un téléviseur sans désembrouillage. On dit qu'une telle ligne embrouillée a subi une permutation circulaire ou une rotation sur elle-même.

En figure 3, on a représenté les lignes de mémoire stockant à l'émission les lignes d'image embrouillées et les diffusant telles quelles.

En figure 4, on a représenté un mode d'adressage et de stockage des lignes d'image embrouillées reçues par le décodeur du souscripteur. On distingue une mémoire de stockage 8, appelée communément un buffer, comprenant, par exemple, 32 lignes de mémoire, chaque ligne de mémoire pouvant stocker les informations numérisées d'une ligne d'image entière.

Selon le procédé de l'invention, une ligne Z diffusée vient remplacer dans le buffer 8 une ligne X précédente située dans la même ligne de mémoire n du buffer 8. Le stockage de la ligne d'image z dans la ligne n du buffer 8 provoque la sortie de la ligne d'image précédente X et son envoi sur le téléviseur, éventuellement après remise en forme ou annulation de la rotation. Par conséquent, l'ordre d'émission des lignes d'image est fonction de l'adresse n de chacune de ces lignes, puisque chaque ligne Z ne sera diffusée que lorsqu'elle viendra en remplacement dans la ligne de mémoire du buffer correspondant à son adresse, d'une ligne précédente X, et seulement à l'instant où la ligne précédente devra être envoyée sur le téléviseur, ceci selon le procédé objet de la demande de brevet européenne 91903324/EP-A-0 469 106 publiée le 05.02.92 et présentant la même priorité que la présente demande.

On voit donc que l'ordre d'émission des lignes n'est pas simplement permuté arbitrairement, mais résulte d'une combinaison avec l'adresse de chaque ligne d'image dans le buffer qui est situé dans le système de réception. La fonction d'embrouillage par permutation de lignes des lignes d'image est donc relative et non absolue.

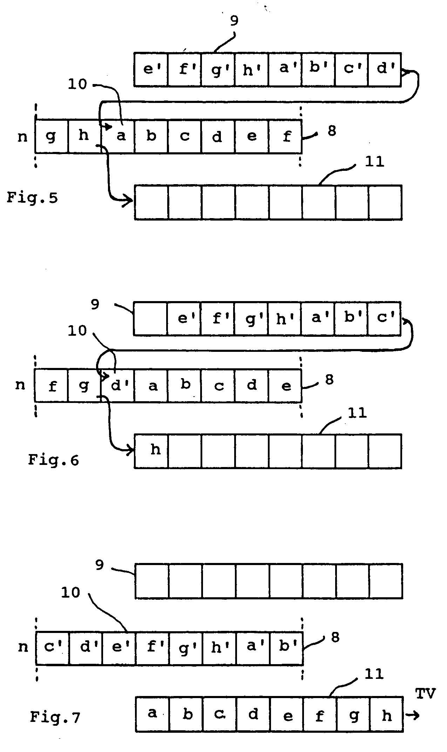

En se reportant maintenant aux figures 5 et suivantes, on verra que la fonction de rotation de la ligne d'image est également, selon l'invention, une fonction relative et non absolue. Ceci constitue un autre aspect de l'invention.

Selon ce mode de réalisation de l'invention, chaque ligne d'image subit une rotation d'une certaine valeur déterminée variable. Ce mode d'embrouillage par rotation de la ligne d'image est bien connu de l'art antérieur et se retrouve dans de nombreux procédés connus d'embrouillage.

Ce qui est nouveau et qui constitue un des aspects de la présente invention, c'est que la ligne Z avec rotation parvenant à la réception vient en remplacement, dans la ligne de mémoire n du buffer 8, d'une ligne X précédente en s'introduisant dans la ligne n du buffer, non pas par une extrémité, mais par une certaine case 10 qui contient l'information a du début de la ligne d'image X stockée préalablement dans cette ligne de mémoire n du buffer 8.

Chaque ligne de mémoire du buffer 8 est agencée de manière à effectuer une permutation circulaire des informations contenues, lors de chaque introduction par l'une quelconque de ces cases mémoire d'une information nouvelle.

Pour expliquer cela autrement, on se reporte à la figure 5. La ligne d'image Z diffusée avec rotation à un instant donné est stockée à la réception dans une ligne mémoire (ou mémoire tampon) 9. Cette ligne Z présente l'adresse n, c'est-à-dire qu'elle est destinée à être stockée dans la ligne de mémoire n du buffer 8. L'information d′ dans la dernière case de la ligne 9 est alors stockée dans la case 10 de la ligne de mémoire n, c'est-à-dire la case qui renfermait l'information a du début de la ligne X stockée précédemment.

Cette introduction de l'information d′, en remplacement de l'information a dans la case 10, provoque le décalage par permutation circulaire de toutes les informations a,b,c,d,e,f,g,h présentes dans la ligne de mémoire n. La dernière information h ne va pas dans la case 10, mais est déstockée et est envoyée vers une autre ligne de mémoire (ou mémoire tampon) 11.

On se retrouve alors dans l'état représenté en figure 6.

On charge ensuite par la même case 10 les autres informations contenues dans la ligne 9, par la fin de cette ligne de mémoire, c'est-à-dire qu'on charge successivement c′, b′, a′, h′, g′, f′, e′.

On se retrouve alors dans l'état représenté en figure 7. On voit que dans la ligne mémoire 11, la ligne d'image est désembrouillée automatiquement et peut donc être envoyée directement sur le téléviseur. On voit aussi que la ligne d'image Z est maintenant stockée dans le buffer 8 avec une rotation différente de la rotation qu'elle avait au moment de sa diffusion. En effet, la ligne d'image Z embrouillée, initialement présente dans la ligne mémoire 9 de la figure 5, débutait par e′, et, après que cette même ligne d'image Z soit stockée dans une ligne n du buffer 8 (figure 7), elle débute par c′. C'est en cela que l'on peut dire que la fonction d'embrouillage réel (ligne d'image Z commençant par c′ dans la figure 7) est une combinaison de la fonction d'embrouillage initial (ligne d'image Z commençant par e′ dans la figure 5) et de la fonction d'embrouillage de la ligne d'image précédente (ligne d'image X commençant par g dans la ligne n du buffer 8 de la figure 5).

En fait, dans le cas où la fonction d'embrouillage est une rotation d'une certaine valeur variable, comme exposé ci-dessus à titre d'exemple non limitatif, la valeur de la rotation réelle de la ligne d'image Z est égale à la valeur de sa rotation initiale, additionnée (ou retranchée) à la valeur de rotation de la ligne précédemment stockée X.

On peut effectuer par ailleurs, simultanément aux opérations de stockage de la ligne d'image Z décrites ci-dessus, un traitement numérique sur certaines informations de la ligne d'image Z, en particulier pour effectuer son lissage au voisinage de sa coupure au niveau z (voir figure 1).

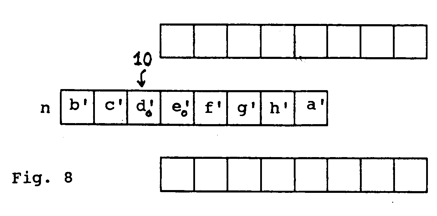

La figure 8 montre comment on peut effectuer un tel lissage. Dans la figure 8, la ligne n du buffer 8 est chargée avec une ligne d'image Z d'une façon similaire à celle de la figure 7. Lors du stockage de cette ligne Z, on poursuit l'introduction par la case mémoire 10 d'un petit nombre de nouvelles valeurs successives (par exemple deux valeurs successives e′ et d′ qui sont légèrement modifiées pour devenir e₀′ et d₀′, c'est-à-dire qu'elles sont pondérées pour faire en sorte qu'il n'y ait pas de décalage visible sur le téléviseur au niveau de la coupure z de la ligne d'image Z.

## Revendications

1. Procédé d'embrouillage et de désembrouillage d'un signal vidéo comprenant :
au niveau de l'émission, des étapes consistant à embrouiller, selon une fonction d'embrouillage déterminée, des séquences du signal vidéo comportant chacune un groupe de lignes, cette fonction d'embrouillage pouvant être différente pour chaque séquence; et à diffuser chaque séquence du signal vidéo ainsi embrouillée; et
au niveau de la réception, le stockage des séquences du signal vidéo embrouillé reçues, suivi d'un désembrouillage de ces séquences du signal vidéo;
caractérisé en ce que :
à l'émission, une première séquence du signal vidéo est embrouillée selon une première fonction d'embrouillage et une autre séquence du signal vidéo est embrouillée selon une autre fonction d'embrouillage; et
à la réception, l'autre séquence du signal vidéo embrouillée selon l'autre fonction d'embrouillage vient se stocker en remplaçant la première séquence du signal vidéo embrouillée selon la première fonction d'embrouillage par remplacement des lignes de la première séquence par des lignes de l'autre séquence de manière à ce que, lors de ce remplacement, l'autre séquence du signal vidéo est stockée de façon embrouillée selon une fonction d'embrouillage qui est égale à une combinaison déterminée de la première fonction d'embrouillage et de l'autre fonction d'embrouillage.

2. Procédé selon la revendication 1, dans lequel chaque fonction d'embrouillage consiste à diffuser un groupe de lignes de l'image vidéo selon un ordre différent de l'ordre normal correspondant à l'image en clair,
caractérisé en ce que on dispose à la réception une mémoire comprenant un nombre déterminé de lignes de mémoire, chaque ligne de mémoire pouvant stocker une ligne d'image reçue, le stockage d'une ligne d'image reçue provoquant l'envoi sur un téléviseur de la ligne précédemment stockée dans cette ligne de mémoire.

3. Procédé selon la revendication 2, caractérisé en ce que chaque fonction d'embrouillage consiste :
à indiquer, pour chaque ligne d'image à diffuser, l'adresse de la ligne de mémoire dans laquelle cette ligne d'image diffusée doit être stockée à la réception; et
à déterminer l'instant d'émission de cette ligne d'image de façon qu'elle vienne remplacer dans la mémoire une ligne d'image précédente au moment où cette ligne d'image précédente doit être envoyée sur le téléviseur dans l'ordre normal des lignes d'image pour générer l'image en clair.

4. Procédé selon la revendication 1, 2 ou 3, caractérisé en ce que chaque fonction d'embrouillage comporte, pour chaque ligne d'image (X, Z), sa diffusion en commençant à un endroit déterminé variable (x, z) de la ligne d'image, en allant jusqu'à la fin de la ligne d'image et en continuant la diffusion depuis le début de ladite ligne d'image jusqu'audit endroit déterminé, provoquant ainsi une rotation de la ligne d'image sur elle-même d'une valeur déterminée variable correspondant audit endroit déterminé.

5. Procédé selon la revendication 4 lorsqu'elle dépend de la revendication 2 ou 3, caractérisé en ce que chaque ligne de mémoire de ladite mémoire à la réception stocke une ligne d'image reçue ayant subi lors de l'émission une certaine rotation, le stockage d'une ligne d'image ainsi reçue (Z) s'effectuant de façon à provoquer le déstockage et l'envoi sur un téléviseur de la ligne d'image précédemment stockée (X) dans la ligne de mémoire ayant subi une autre rotation, ce déstockage s'effectuant selon l'ordre normal de la ligne d'image exempte de rotation, afin que cette ligne d'image (X) soit envoyée directement sur le téléviseur pour constituer l'image en clair.

6. Procédé selon la revendication 5, caractérisé en ce que chaque ligne de mémoire de ladite mémoire comporte un certain nombre de cases mémoire correspondant à chaque point d'image d'une ligne d'image et est constituée de façon à pouvoir effectuer une permutation circulaire, le stockage de la ligne d'image suivante (Z) ayant subi une certaine rotation (a) s'effectuant dans la case mémoire (10) correspondant au début (a) de la ligne d'image qui était précédemment stockée (X) dans la ligne de mémoire (n) et qui avait subi l'autre rotation (x), le déstockage de cette ligne d'image précédemment stockée s'effectuant simultanément audit stockage et s'effectuant depuis la case dans laquelle est stockée la fin (h) de cette ligne d'image précédemment stockée (X), de façon qu'au fur et à mesure que s'effectue le stockage de la ligne d'image suivante (Z) avec rotation, il s'effectue en même temps le déstockage de la ligne d'image précédente (X) selon son ordre normal, c'est-à-dire exempte de rotation, pour l'envoyer directement sur le téléviseur.

7. Procédé selon la revendication 5 ou 6, caractérisé en ce que le stockage dans la ligne de mémoire de la ligne d'image suivante (Z) ayant subi une certaine rotation s'effectue en commençant par la dernière information de cette ligne d'image avec rotation, et en ce que la valeur de la rotation de la ligne d'image suivante telle qu'elle se stocke dans la ligne de mémoire est égale à la valeur de la rotation de la ligne d'image suivante telle qu'elle a été diffusée, additionnée à la valeur de la rotation de la ligne d'image précédemment stockée dans la même ligne de mémoire telle qu'elle avait été stockée dans cette ligne de mémoire.

8. Procédé selon l'une des revendications précédentes, caractérisé en ce que lors du stockage de la ligne d'image suivante, les informations de la ligne d'image suivante situées au voisinage de sa coupure effectuée dans la ligne d'image au niveau de l'émission sont stockées avec une certaine pondération afin d'effectuer pendant le stockage un lissage de la ligne d'image.

9. Procédé selon la revendication 2 ou l'une quelconque des revendications 3 à 8 lorsqu'elle se rapporte à la revendication 2, caractérisé en ce que le stockage dans la ligne de mémoire de la ligne d'image suivante ayant subi une rotation d'une certaine valeur s'effectue en commençant par une information située selon un décalage constant prédéterminé par rapport à la dernière information de cette ligne d'image avec rotation, et lorsque le stockage de cette ligne d'image est achevé la permutation circulaire de la ligne d'image stockée est poursuivie selon un autre décalage prédéterminé, en effectuant lors de chaque permutation au cours de ce décalage une correction des informations contenues dans la case par où a été fait le stockage, afin d'effectuer un lissage de la ligne d'image au voisinage de sa coupure effectuée lors de l'émission.

10. Système d'embrouillage et de désembrouillage d'un signal vidéo, comprenant :
une station d'émission agencée pour embrouiller, selon une fonction d'embrouillage déterminée, des séquences du signal vidéo comportant chacune un groupe de lignes, cette fonction d'embrouillage pouvant être différente pour chaque séquence, et pour diffuser chaque groupe de lignes de l'image vidéo selon un ordre différent de l'ordre normal correspondant à l'image en clair; et
des stations de réception comportant chacune des moyens pour effectuer le stockage des séquences du signal vidéo embrouillé reçues et ensuite le désembrouillage de ces séquences du signal vidéo;
caractérisé en ce que
la station d'émission est agencée de manière à embrouiller une première séquence du signal vidéo selon une première fonction d'embrouillage et à embrouiller une autre séquence du signal vidéo selon une autre fonction d'embrouillage;
chaque station de réception comprend une mémoire comportant un nombre déterminé de lignes de mémoire, chaque ligne de mémoire pouvant stocker une ligne d'image reçue de manière à ce que chaque séquence du signal vidéo embrouillée vient se stocker par remplacement d'une ligne d'une première séquence par une ligne d'une autre séquence selon une fonction d'embrouillage qui est égale à une combinaison des fonctions d'embrouillage de ces deux lignes; et
le système est agencé de manière à ce que le stockage d'une ligne d'image reçue dans une ligne de mémoire de ladite mémoire d'une station de réception provoque l'envoi sur un téléviseur de la ligne précédemment stockée dans cette ligne de mémoire dans l'ordre normal des lignes d'image pour générer l'image en clair.

11. Dispositif pour le stockage et le désembrouillage d'un signal vidéo embrouillé selon le procédé de l'une quelconque des revendications 1 à 9 utilisant, à la réception, un décodeur pourvu d'une mémoire,
caractérisé en ce que la mémoire du décodeur comporte un nombre déterminé de lignes de mémoire, chaque ligne de mémoire pouvant stocker une ligne d'image reçue de manière à ce que chaque séquence du signal vidéo embrouillée vient se stocker par remplacement d'une ligne d'une première séquence par une ligne d'une autre séquence selon une fonction d'embrouillage qui est égale à une combinaison des fonctions d'embrouillage de ces deux lignes, le stockage d'une ligne d'image reçue dans une ligne de mémoire de la mémoire du décodeur provoquant l'envoi sur un téléviseur de la ligne précédemment stockée dans cette ligne de mémoire dans l'ordre normal des lignes d'image pour générer l'image en clair.

## Patentansprüche

1. Verfahren zur Verwürfelung und Auflösung eines Videosignals, umfassend:
- in der Ebene des Sendens Schritte, daraus bestehend, daß gemäß einer bestimmten Verwürfelungsfunktion Folgen des Videosignals verwürfelt werden, die jeweils eine Zeilengruppe umfassen, wobei diese Verwürfelungsfunktion für jede Folge unterschiedlich sein kann; und daß jede so verwürfelte Folge des Videosignals gesendet wird; und
- in der Ebene des Empfangs das Speichern der empfangenen Folgen des verwürfelten Videosignals, gefolgt von einer Auflösung dieser Folgen des Videosignals;
dadurch **gekennzeichnet,** daß :
- beim Senden eine erste Folge des Videosignals gemäß einer ersten Verwürfelungsfunktion verwürfelt wird und eine weitere Folge des Videosignals gemäß einer weiteren Verwürfelungsfunktion verwürfelt wird; und
- beim Empfang die gemäß der anderen Verwürfelungsfunktion verwürfelte Folge des Videosignals gespeichert wird, wobei die gemäß der ersten Verwürfelungsfunktion verwürfelte erste Folge des Videosignals durch Austauschen der Zeilen der ersten Folge durch die Zeilen der anderen Folge ausgetauscht wird derart, daß zur Zeit des Austausches die andere Folge des Videosignals auf verwürfelte Weise gemäß einer Verwürfelungsfunktion gespeichert wird, die gleich einer aus der ersten Verwürfelungsfunktion und der anderen Verwürfelungsfunktion bestimmten Kombination ist.

2. Verfahren nach Anspruch 1, bei dem jede Verwürfelungsfunktion darin besteht, daß eine Gruppe von Zeilen des Videobildes gemäß einer Reihenfolge verschieden von der normalen Reihenfolge entsprechend dem unverschlüsselten Bild gesendet wird,
dadurch **gekennzeichnet,** daß beim Empfang ein Speicher vorgesehen wird, umfassend eine bestimmte Anzahl von Speicherzeilen, wobei jede Speicherzeile eine empfangene Bildzeile speichern kann, wobei das Speichern einer empfangenen Bildzeile das Senden der vorher in dieser Speicherzeile gespeicherten Zeile auf einen Fernsehempfänger herbeiführt.

3. Verfahren nach Anspruch 2, dadurch **gekennzeichnet,** daß jede Verwürfelungsfunktion darin besteht, daß:
- für jede zu sendende Bildzeile die Adresse der Speicherzeile angegeben wird, in der diese gesendete Bildzeile beim Empfang gespeichert werden soll; und
- der Zeitpunkt des Sendens dieser Bildzeile bestimmt wird derart, daß sie im Speicher eine vorhergehende Bildzeile in dem Augenblick ersetzt, in dem diese vorhergehende Bildzeile in der normalen Reihenfolge der Bildzeilen zum Fernsehempfänger geschickt werden soll, um das unverschlüsselte Bild zu erzeugen.

4. Verfahren nach Anspruch 1, 2 oder 3, dadurch **gekennzeichnet,** daß jede Verwürfelungsfunktion umfaßt, daß für jede Bildzeile (X, Z) ihr Senden an einer veränderlichen, vorbestimmten Stelle (x, z) der Bildzeile begonnen wird, wobei bis zum Ende der Bildzeile gegangen wird und wobei das Senden von dem Beginn der Bildzeile bis zu der bestimmten Stelle fortgesetzt wird, wobei so eine Rotation der Bildzeile auf sich selbst um einen veränderlichen, bestimmten Wert entsprechend der bestimmten Stelle herbeigeführt wird.

5. Verfahren nach Anspruch 4, wenn er vom Anspruch 2 oder 3 abhängig ist, dadurch **gekennzeichnet,** daß jede Speicherzeile des Speichers beim Empfang eine empfangene Bildzeile speichert, die zur Zeit des Sendens eine bestimmte Rotation erfahren hat, wobei das Speichern einer so empfangenen Bildzeile (Z) derart erfolgt, daß das Entspeichern und das Senden der vorher gespeicherten Bildzeile (X) in der Speicherzeile, die eine weitere Rotation erfahren hat, zum Fernsehempfänger herbeigeführt werden, wobei die Entspeicherung in der normalen Reihenfolge der Bildzeile frei von Rotation erfolgt, damit diese Bildzeile (X) direkt zum Fernsehempfänger gesendet wird, um das unverschlüsselte Bild zu bilden.

6. Verfahren nach Anspruch 5, dadurch **gekennzeichnet,** daß jede Speicherzeile des Speichers eine bestimmte Anzahl von Speicherfächern entsprechend jedem Bildpunkt einer Bildzeile umfaßt und gebildet ist derart, daß sie eine Kreispermutation ausgeführt werden kann, wobei das Speichern der folgenden Bildzeile (Z), die eine bestimmte Rotation (a) erfahren hat, in dem Speicherfach (10) entsprechend dem Anfang (a) der Bildzeile erfolgt, die vorher in der Speicherzeile (n) gespeichert war (X) und die die andere Rotation (x) erfahren hat, wobei das Entspeichern dieser vorher gespeicherten Bildzeile gleichzeitig mit dem Speichern erfolgt und von dem Fach an erfolgt, in dem das Ende (h) dieser vorher gespeicherten Bildzeile (X) gespeichert ist derart, das je nach dem, wie das Speichern der folgenden Bildzeile (Z) mit Rotation erfolgt, es gleichzeitig mit der Entspeicherung der vorhergenden Bildzeile (X) gemäß der normalen Reihenfolge erfolgt, d.h. frei von Rotation, um sie direkt zum Fernsehempfänger zu senden.

7. Verfahren nach Anspruch 5 oder 6, dadurch **gekennzeichnet,** daß das Speichern der folgenden Bildzeile (Z), die eine bestimmte Rotation erfahren hat, in der Speicherzeile erfolgt, wobei mit der letzten Information dieser Bildzeile mit Rotation begonnen wird, und daß der Wert der Rotation der folgenden Bildzeile, so wie sie in der Speicherzeile gespeichert ist, gleich dem Wert der Rotation der folgenden Bildzeile ist, so wie sie gesendet worden ist, hinzugefügt zu dem Wert der Rotation der vorher in derselben Speicherzeile gespeicherten Bildzeile, so wie sie in dieser Speicherzeile gespeichert war.

8. Verfahren nach einem der vorhergehenden Ansprüche, dadurch **gekennzeichnet,** daß zur Zeit des Speicherns der folgenden Bildzeile die Informationen der folgenden Bildzeile, die in der Nähe ihres in der Bildzeile ausgeführten Abtrennens in der Sendeebene liegen, mit einer bestimmten Gewichtung gespeichert werden, um während des Speicherns eine Glättung der Bildzeile auszuführen.

9. Verfahren nach Anspruch 2 oder oder einem beliebigen der Ansprüche 3 bis 8, wenn er sich auf den Anspruch 2 bezieht, dadurch **gekennzeichnet,** daß das Speichern in der folgenden Bildzeile in der Speicherzeile erfolgt, die eine Rotation um einen bestimmten Wert erfahren hat, wobei mit einer gemäß einer in bezug auf die letzte Information dieser Bildzeile mit Rotation vorbestimmten, konstanten Verschiebung gelegenen Information begonnen wird, und wenn das Speichern dieser Bildzeile beendet ist, die Kreispermutation der gespeicherten Bildzeile von einer weiteren vorbestimmten Verschiebung gefolgt wird, wobei zur Zeit jeder Permutation im Verlauf dieser Verschiebung eine Korrektur der in dem Fach enthaltenen Informationen ausgeführt wird, wo das Speichern erfolgt ist, um eine Glättung der Bildzeile in der Nähe ihres zur Zeit des Sendens bewirkten Abtrennens auszuführen.

10. System zur Verwürfelung und Auflösung eines Videosignals, umfassend:
- eine Sendestation, die angeordnet ist, um gemäß einer bestimmten Verwürfelungsfunktion Folgen des Videosignals zu verwürfeln, aufweisend jeweils eine Zeilengruppe, wobei diese Verwürfelungsfunktion für jede Folge unterschiedlich sein kann, und um jede Zeilengruppe des Videobildes gemäß einer von der normalen Reihenfolge entsprechend dem unverschlüsselten Bild verschiedenen Reihenfolge zu senden; und
- Empfangsstationen, umfassend jeweils Mittel, um das Speichern der empfangenen Folgen des verwürfelten Videosignals und anschließend das Auflösen dieser Folgen des Videosignals auszuführen;
dadurch **gekennzeichnet,** daß
- die Sendestation eingerichtet ist derart, daß sie eine erste Folge des Videosignals gemäß einer ersten Verwürfelungsfunktion verwürfelt und eine weitere Folge des Videosignals gemäß einer weiteren Verwürfelungsfunktion verwürfelt;
- jede Empfangsstation einen Speicher aufweist, umfassend eine bestimmte Anzahl von Speicherzeilen, wobei jede Speicherzeile eine empfangende Bildzeile speichern kann derart, daß jede Folge des verwürfelten Videosignals durch Austausch einer Zeile einer ersten Folge durch eine Zeile einer weiteren Folge gemäß einer Verwürfelungsfunktion gespeichert wird, die gleich einer Kombination der Verwürfelungsfunktionen dieser beiden Zeilen ist; und
- das System eingerichtet ist derart, daß das Speichern einer empfangenden Bildzeile in einer Speicherzeile des Speichers einer Empfangsstation das Senden der vorher gespeicherten Zeile in dieser Speicherzeile in der normalen Reihenfolge der Bildzeilen zu einem Fersehempfänger herbeiführt, um das unverschlüsselte Bild zu erzeugen.

11. Vorrichtung zum Speichern und Auflösen eines verwürfelten Videosignals gemäß dem Verfahren eines beliebigen der Ansprüche 1 bis 9, wobei beim Empfang ein mit einem Speicher versehener Dekodierer verwendet wird,
dadurch **gekennzeichnet,** daß der Speicher des Dekodierers eine vorbestimmte Anzahl von Speicherzeilen umfaßt, wobei jede Speicherzeile eine empfangene Bildzeile speichern kann derart, daß jede Folge des verwürfelten Videosignals durch Austausch einer Zeile einer ersten Folge durch eine Zeile einer weiteren Folge gemäß einer Verwürfelungsfunktion gespeichert wird, die gleich einer Kombination der Verwürfelungsfunktionen dieser beiden Zeilen ist, wobei die Speicherung einer empfangenen Bildzeile in einer Speicherzeile des Speichers des Dekodierers das Senden der in dieser Speicherzeile vorhergehend gespeicherten Zeile zu einem Fersehempfänger in der normalen Reihenfolge der Bildzeilen herbeiführt, um das unverschlüsselte Bild zu erzeugen.

## Claims

1. A method for scrambling and unscrambling a video signal comprising :
at the emitting site, the steps of scrambling, in accordance with a predetermined scrambling function, video signal sequences each comprising a group of lines, which scrambling function can be different for each sequence; and emitting each thus-scrambled video signal sequence; and
at the receiving site, storing the received scrambled video sequences, followed by unscrambling these video signal sequences;
characterized in that :
at the transmitting site, a first video sequence is scrambled in accordance with a first scrambling function and another video signal sequence is scrambled in accordance with another scrambling function; and
at the receiving site, the other video signal sequence scrambled in accordance with the other scrambling function is stored in place of the first video signal sequence scrambled in accordance with the first scrambling function by replacing lines of the first sequence by lines of the other sequence such that, at the time of this replacement, the other video signal sequence is stored in a scrambled manner in accordance with a scrambling function which is equal to a predetermined combination of the first scrambling function and the other scrambling function.

2. The method according to claim 1, in which each scrambling function consists in successively emitting a group of lines of the video image in an order different than the normal order which corresponds to the intelligible image,
characterized in that at the receiving site there is a storage memory comprising a predetermined number of memory lines, each memory line being able to store one received image line, the storage of one received image line causing the sending to the TV receiver of the line previously stored in this memory line.

3. The method according to claim 2, characterized in that each scrambling function consists in :
indicating, for each image line to be emitted, the address of the memory line in which this emitted image line is be stored at the reception; and
determining the emitting time of this image line in such a way that it replaces in the memory a previous image line at the time where this previous image line has to be sent to the TV receiver in the normal order of the image lines for generating the intelligible image.

4. The method of claim 1, 2 or 3, characterized in that each scrambling function includes, for each image line (X,Z), the emission thereof beginning with a given variable location (x,z) of the image line, proceeding up to the end of the image line and continuing the emission thereof from the beginning of said image line up to said given location, hence producing a rotation of the image line about itself by a predetermined variable value corresponding to said given location.

5. The method of claim 4 when depending on claim 2 or 3, characterized in that each memory line of said memory at the receiving site stores a received image line which underwent a given rotation upon emission, the storage of a thus-received image line (Z) being such as to produce the outputting of and sending to a TV receiver of the image line (X) previously stored in the memory line which has been rotated by a different amount, this outputting taking place in the normal non-rotated sequence of the image line so that this image line (X) is sent directly to the TV receiver to produce an intelligible image.

6. The method of claim 5, characterized in that each memory line of said memory includes a given number of memory locations corresponding to each image point of an image line and is arranged so as to be able to produce a circular permutation, the storage of the following image line (Z) which has undergone a given rotation (a) taking place in the memory location (10) corresponding to the beginning (a) of the image line (X) that had previously been stored in the memory line (n) and which had undergone the other rotation (x), the outputting of this previously-stored image line taking place simultaneously with said storage and beginning from the location at which the end (h) of this previously-stored image line (X) was stored, such that while the storage of the following image line (Z) progressively takes place with rotation, at the same time the previously-stored image line (X) is output in its normal order, i.e. exempt from rotation, to be sent directly to a TV receiver.

7. The method according to claim 5 or 6, characterized in that storage in the memory line of the following image line (Z) which has undergone a given rotation takes place beginning with the last information contained in this rotated image line, and in that the amount of rotation of the following image line for it to be stored in the memory line is equal to the value of the rotation of the following image line as it had been emitted, plus the value of the rotation of the image line previously stored in the same memory line as it had been stored in this memory line.

8. The method according to any of the previous claims, characterized in that during storage of the following image line, information contained in the following image line adjacent to the cutting point made in the image line upon emission is stored with a given weighting in order to produce smoothening of the image line during storage.

9. The method according to claim 2, or any one of claims 3 to 8 when depending on claim 2, characterized in that storage in the memory line of the following image line having undergone a rotation of given magnitude takes place beginning with information situated with a predetermined constant shift relative to the last information contained in this rotated image line, and when storage of this image line is complete, circular permutation of the stored image line is continued with another predetermined shift, by performing upon each permutation during this shift a correction of the information contained in the location where storage had taken place, in order to produce a smoothening of the image line adjacent to the cut made upon emission.

10. A system for scrambling and descrambling a video signal, comprising :
an emitting station arranged to scramble, in accordance with a predetermined scrambling function, video signal sequences each comprising a group of lines, which scrambling function can be different for each sequence, and to emit each group of lines of the video image in an order different to the normal order corresponding to the intelligible image; and
receiving stations, each comprising means for storing the received scrambled video signal and then unscrambling these sequences of the video signal;
characterized in that :
the transmitting station is arranged so as to scramble a first video sequence in accordance with a first scrambling function and to scramble another sequence of the video signal in accordance with another scrambling function;
each receiving station comprising a memory including a predetermined number of memory lines, each memory line being able to store a received image in such a manner that each sequence of the scrambled video signal is stored by replacing one line of a first sequence by one line of another sequence according to a scrambling function which is equal to a combination of the scrambling functions of these two lines; and
the system is arranged so that the storage of a received image line in one memory line of a receiving station causes the sending to a TV receiver of the line previously stored in this memory line in the normal order of the image lines to generate an intelligible image.

11. A device for storing and unscrambling a video signal scrambled according to the method of any one of claims 1 to 9 using, at the receiving site, a decoder provided with a memory,
characterized in that the decoder's memory includes a given number of memory lines, each memory line being able to store a received image line such that each sequence of the scrambled video signal is stored by replacing one line of a first sequence by one line of another sequence according to a scrambling function which is equal to a combination of the scrambling functions of these two lines, the storage of one image line received in one memory line of the decoder's memory causing sending to a TV-receiver of the line previously stored in this memory line in the normal order of the image lines to generate an intelligible image.
